**Europäisches Patentamt**

**European Patent Office**

**Office européen des brevets**

(19)

(11) Numéro de publication: **0 057 139**
**A2**

(12) # DEMANDE DE BREVET EUROPEEN

(21) Numéro de dépôt: **82400112.7**

(22) Date de dépôt: **21.01.82**

(51) Int. Cl.³: **B 07 C 5/00**
**B 07 C 5/36, B 03 B 9/06**

(30) Priorité: **22.01.81 FR 8101133**

(43) Date de publication de la demande:
**04.08.82 Bulletin 82/31**

(84) Etats contractants désignés:
**AT BE CH DE GB IT LI LU NL SE**

(71) Demandeur: **BUREAU DE RECHERCHES**
**GEOLOGIQUES ET MINIERES**
**6-8, rue Chasseloup-Laubat**
**F-75737 Paris Cedex 15(FR)**

(72) Inventeur: **Barbery, Gilles**
**7, rue de la République**
**F-45000 Orleans(FR)**

(72) Inventeur: **Clin, François**
**14, rue Xaintrailles**
**F-45000 Orleans(FR)**

(72) Inventeur: **Gony, Jean-Noel**
**32, rue Mouillère**
**F-45100 Orleans(FR)**

(72) Inventeur: **Kerloveou, Christian**
**74, bd Alexandre Martin**
**F-45000 Orleans(FR)**

(72) Inventeur: **Proust, François**
**182, rue de Bunelle**
**F-45160 Olivet(FR)**

(74) Mandataire: **Blain, Alfred Max**
**22 Avenue de l'Opéra**
**F-75001 Paris(FR)**

(54) Procédé et appareil de tri automatique de mélanges d'emballages et similaires usagés ou non.

(57) L'invention se rapporte à un procédé de tri d'objets tels qu'emballages métalliques ou plastiques provenant de procédés de tri global des ordures ménagères ou de rejets de chaînes industrielles. De tels mélanges sont d'abord triés pour éliminer les objets de plus petites dimensions par un crible (2). Un répartiteur (4) permet d'alimenter les objets un à un dans une position stable en rendant leur plus petites dimensions perpendiculaires au sens d'avancement. Après centrage sur le transporteur (11), les objets sont amenés un à un aux postes de détection de corps métalliques (5,6), puis de détection des corps transparents au rayonnement infrarouge. Ces postes sont doublés de cellules optiques (7, 8 et 42) détectant la présence et la forme des objets. Des circuits logiques (18) commandent les éjections d'objets dans les réceptacles (13, 36, 46) et laissent les produits hétéroclites sur le transporteur.

On aboutit ainsi à des types d'appareils rapides, souples et fiables.

Fig. 2

L'invention se rapporte à un procédé et un appareil de tri automatique de mélanges d'emballages usagés ou non et de tous produits similaires.

Les techniques de tri automatique, quoique procédant toutes de méthodes semblables comprenant en général au moins une phase d'alimentation, une phase de détection d'une des caractéristiques possibles des produits à trier, une phase de comparaison, fonction des critères de sélection retenus et une phase de tri mécanique proprement dite, diffèrent cependant profondémment dans l'agencement des moyens utilisés et dans les résultats obtenus, selon la complexité des produits triés, les critères de sélection adoptés, et les divers moyens d'alimentation, de détection, d'analyse et de répartition des produits.

En particulier et en dépit des nombreux procédés de tri existants, on ne connait aucun appareil permettant une sélection rapide d'emballages usagés ou non, et susceptibles de comporter : des mélanges d'emballages formés principalement d'enveloppes métalliques, d'emballages ne comportant que des parcelles métalliques, d'emballages en matières plastiques comme les bouteilles en polyéthylène avec opercules d'aluminium, les bouteilles en polychlorure de vinyle, ou d'empaquetages complexes : aluminium, carton, polyéthylène ainsi que des cartons, papiers, barquettes de polystyrène.

Ainsi, un objet de l'invention est un procédé de tri automatique de mélanges d'emballages et similaires, usagés ou non, ces mélanges répondant déjà à des catégories d'objets données de façon à réduire le nombre d'opérations de tri de nature différentes, caractérisé en ce que la phase d'alimentation comprend un premier tri selon des critères de dimensions favorisant, au cours de la phase suivante l'alignement automatique des objets les uns à la suite des autres et dans un sens favorisant leur stabilité sur un élément transporteur, de telle sorte que chaque objet se présente aux postes de détection de caractéristiques données dans une position stable permettant à la fois l'analyse de l'objet selon le critère de détection retenu et le repérage de la position de l'objet par rapport au poste considéré.

Dans un mode de réalisation préféré de l'invention, les objets a trier se présentent selon leur longueur, et sont ana-

lysés, en dépit des distances variables séparant deux objets successifs, en se référant à la position qu'ils occupent par rapport au lieu précis de détection d'un critère donné.

Il en résulte que contrairement à de nombreuses méthodes de tri où la vitesse des objets est variable, il est possible de tenir compte de cette vitesse et du repérage de l'objet par rapport au lieu d'analyse, pour faire varier le temps de la commande mécanique du tri de l'objet de façon que l'action directe du moyen de tri utilisé se produise à tous endroits appropriés de l'objet venant d'être analysé.

A titre d'exemple, les mélanges peuvent contenir des emballages tels que bouteilles en polyéthylène avec opercule d'aluminium se présentant à distance variable d'un autre objet. Si le tri s'effectue en fonction de la présence de toute partie métallique, il est clair qu'une commande de tri systématique après un temps fixe ne pourrait avoir une action efficace sur l'objet dont on vient de détecter une présence métallique puisque l'opercule pourrait se présenter soit en tête soit en queue de l'objet et que selon l'un ou l'autre cas la commande de tri, effectuée un temps donné fixe après la détection, entraînerait une action trop rapide ou trop tardive et serait susceptible de ne pas entraîner une sélection correcte des objets.

Par contre selon l'invention l'objet est repéré par rapport au lieu de détection du critère choisi et la commande de tri s'effectue à un temps variable fonction de ce repérage, opérant ainsi un tri efficace de l'objet au lieu de sélection choisi.

Une autre caractéristique de l'invention est d'associer à un tri par détection des objets métalliques ou contenant des parties métalliques, un tri par degré de transparence à des rayonnements donnés, le tri par détection des parties métalliques suivant le tri en dimensions et l'opération de mise en position stable de l'objet sur ses bandes transporteuses.

Cette caractéristique se différentie des nombreux procédés de détection utilisant les effets de rayonnement par réflexion sur les surfaces des corps à trier défilant à vitesse constante ou non.

En effet, alors qu'en raison des écarts importants des résultats dus aux variations de l'angle d'incidence des rayonnements, de tels procédés nécessiteraient pour fournir des résultats numériques précis des positions pratiquement identiques des objets entre eux lorsque leurs caractéristiques sont très voisines, la détermination des degrés de transparence à des rayonnements donnés, tel que les rayonnements infra-rouge, permettent d'éviter tous écarts importants des résultats fournis par les capteurs de ces rayonnements, dès que ces rayonnements traversent l'objet et sont sensiblement perpendiculaires à l'élément transporteur sur lequel l'objet repose de façon stable. Cette condition est remplie selon l'invention en raison d'une part de la mise en présentation stable et suivant leur plus grande longueur des objets préalablement triés en dimensions et de la disposition entre capteurs et émetteurs de rayonnement situés de part et d'autre de l'objet en cours d'analyse, la direction du rayonnement étant parallèle à la plus petite dimension de l'objet.

Une autre caractéristique de l'invention est d'associer à tout poste de détection d'un critère donné, un organe optique de détection de la présence d'un objet permettant de transmettre des résultats relatifs au calibrage de l'objet à un ensemble de circuits logiques de commande du tri mécanique fonction des sélections désirées.

On réalise ainsi des appareils rapides et fiables, ayant de surcroît une grande souplesse en raison des liaisons électriques logiques facilitant l'évacuation de tous objets ne répondant pas à des normes de dimensions, comme les objets se recouvrant par exemple, ou à des normes données de transparence permettant de ne pas tenir compte de variations accidentelles en raison de la présence d'étiquettes masquant une partie de l'objet, de perforations, ou de formes particulières provenant d'objets usagés.

D'autres avantages et caractéristiques de l'invention ressortiront de la description suivante, faite en référence aus dessins annexés qui représentent, à titre d'exemple non limitatif, un mode de réalisation d'un appareil de tri d'emballages.

La figure 1, représente de façon schématique et en élévation un appareil à trois postes de sélection,

La figure 2 représente la vue schématique en plan de l'appareil équipé de ses liaisons logiques de commandes.

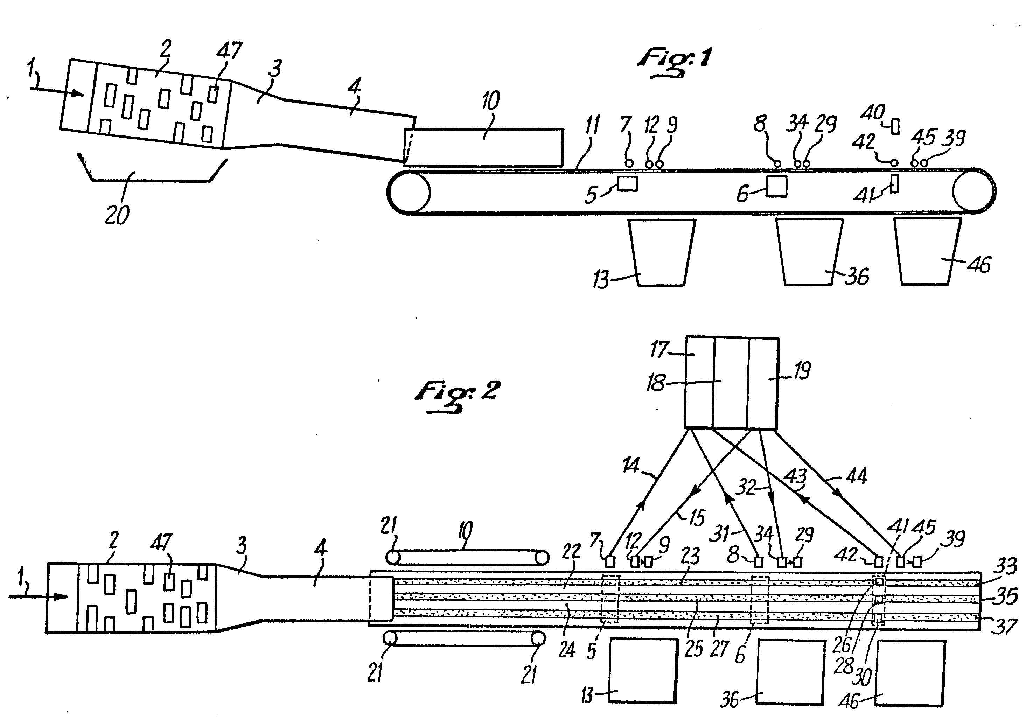

Dans l'exemple de gamme de tri considéré, et à seule fin de faciliter l'exposé, on supposera que les produits traités sont constitués d'emballages dont deux dimensions sont inférieures à 200 mm et l'une est supérieures à 50 mm.

L'alimentation, schématisée, par la flèche 1 s'effectue par exemple à un débit de l'ordre de 200 Kg/h. Les produits alimentés peuvent provenir de mélanges obtenus soit en dernière phase de procédés de tri global des ordures ménagères, soit de collectes sélectives des ordures ménagères ou encore de rejets de chaînes industrielles.

On supposera pour fixer les idées que les objets à trier sont composés notamment de bombes pour aérosols en aluminium, de bouteilles en polyéthylène avec ou sans opercule d'aluminium, de bouteilles en polychlorure de vinyle, d'empaquetages complexes - aluminium - carton - polyéthylène ainsi que de cartons, papiers, barquettes de polystyrène etc... et que l'on désire produire des concentrés de matériaux suffisamment purs pour être réutilisés industriellement, par exemple sous formes de déchets d'aluminium, de déchets de polychlorure de vinyle et de déchets de polyéthylène.

Préalablement à toute opération, la phase d'alimentation 1 est suivie d'une phase de criblage, opérée par le cylindre perforé et rotatif 2. Celui-ci présente des trous 47 non alignés, de l'ordre de 85 mm x 120 mm, dont le petit côté se trouve sur une génératrice facilitant ainsi le traitement des corps allongés sans risque d'accrochage de cols de bouteilles dans les trous de criblage.

On élimine de la sorte les petits objets dans le bac récepteur 20 tout en préparant une distribution unitaire, homogène et orientée des objets à traiter. A cet effet, on fait suivre l'opération de criblage par une opération de présentation proprement dite en adjoignant au cylindre de criblage 2 un cylindre plus étroit 4 raccordé au cylindre de criblage 2 par un élément de jonction tronconique 3. L'inclinaison de l'axe commun des cylindres 2 et 4 est telle que la génératrice inférieure du tronc de cône 3 a une certaine inclinaison qui peut même être aussi minime qu'au moins un degré mais de même sens que l'inclinaison de l'axe, pour éviter tout risque d'arrêt à l'endroit du raccord lorsque la vitesse de rotation autour de l'axe commun est de l'ordre de 40 tours par minute.

Les objets non conformes aux normes de tri adoptées sont donc évacués sur le couloir ou le réceptacle 20, tandis que les objets conformes sont, en raison de leurs dimensions et du plus petit diamètre du cylindre 4, amenés à prendre des positions de défilement un à un, condition que ne permettrait pas la présence des objets éliminés en 20. Il en résulte que tous les emballages se présentant sous forme de bouteilles sortent du cylindre 4 longitudinalement alors que les emballages de formes différentes s'orientent dans une position stable mais plus ou moins bien centrée par rapport au plan vertical passant par l'axe du cylindre. On facilite encore la bonne orientation des objets en limitant l'espace intérieur du cylindre 4 par une surface telle qu'une plaque parallèle à son axe et s'appliquant sur deux génératrices intérieures.

Les objets déjà préalablement triés sont donc acheminés avec une orientation favorisant leur stabilité leur plus petite dimension étant perpendiculaire au sens de leur avancement. Ils se présentent les uns derrière les autres à la sortie du cylindre répartiteur 4 puis sont centrés en utilisant des joues latérales 10 de part et d'autre d'un élément transporteur 11. Ces joues sont équipées de courroies ou de bandes tournant autour des rouleaux verticaux 21. Elles sont animées de vitesses différentes mais supérieures à celle de l'élément transporteur 11 qui peut être de l'ordre de 2m/s pour le traitement des emballages considérés à titre d'exemple. Cette disposition qui entraîne l'accélération des objets orientés en présentant leur plus grandes dimensions parallèles au sens d'avancement permet l'entraînement stable des objets sur l'élément transporteur.

L'élément transporteur 11 est formé d'au moins trois courroies, par exemple de type à section trapézoïdale ou encore de simples bandes étroites ces courroies ou bandes étant côte à côte et s'interrompant au moins en un endroit, au moyen de renvois sur poulies, de façon à créer un espace qui se trouve chevauché par les objets dont les dimensions sont obligatoirement supérieures à cet espace. Un tel espace peut aussi être produit par deux bandes alignées. Dans l'exemple choisi, les bandes 22 et 24 ne sont pas interrompues, les bandes 23, 25 et 27 s'arrêtant pour laisser des ouvertures 26, 28 et 30. Les bandes 33, 35 et 37 assurent avec les bandes 22 et 24 l'éjection 16 des objets non triés.

Afin d'améliorer encore le centrage des objets divers se présentant un à un à la sortie du répartiteur 4 les bandes 22, 24, 23, 25 et 27 peuvent dans cette région se présenter en forme d'auge, les bandes latérales étant surélevées par rapport aux bandes centrales. En outre les objets heurtant les bandes des joues latérales 10 sont accélérés en leur point de contact par rapport au dispositif d'entraînement 11 de sorte qu'à aucun moment un objet n'est freiné dans son mouvement d'avancement et de centrage.

La récupération des objets métalliques s'effectue dans le cas considéré en deux phases afin de séparer les corps tels que les bombes aérosols en aluminium et les objets ne contenant que des parcelles de métal.

Etant donné la grande variété des objets, intacts ou non, susceptibles de se présenter devant les postes de détection, . on associe à chaque poste une cellule optique dont le rôle est de déterminer la présence d'un objet au poste de détection ainsi que l'endroit de l'objet où l'analyse s'effectue.

C'est ainsi que l'on a représenté en regard des deux détecteurs de présence métallique 5 et 6 deux cellules photo-électriques 7 et 8 permettant de connaître éventuellement le contour latéral de l'objet au cours de son défilement au dessus des détecteurs métalliques 5 et 6, les rayonnements optiques intervenant jusqu'au ras du niveau des bandes transporteuses.

Tous les détecteurs utilisés étant des dispositifs du commerce ces dispositifs, ainsi que les cellules photoélectriques, n'ont été représentés que schématiquement.

Le détecteur 5 a pour rôle la détection des objets métalliques et a une sensibilité faible de façon à ne pas répondre aux objets ne présentant que quelques parcelles métalliques. Le seuil de sensibilité peut être réglé précisément en fonction du tri désiré. Le principe de détection consiste à induire des courants de Foucault dans les objets métalliques en les faisant passer dans un champ magnétique, le dispositif détectant les variations de champ produites par les courants induits.

L'information fournie par le détecteur 5 et par la cellule optique 7 est transmise à un module récepteur 17 associé à un module de traitement logique 18 et à un module de commande d'un organe d'éjection 19.

Lorsque l'objet a été analysé en 5 il passe devant le poste d'éjection 9 associé à une cellule de commande 12 et à un réceptacle 13, de telle sorte qu'en fonction de la logique adoptée, la transmission des signaux de détection schématisée en 14 provoque ou non une transmission 15 de signaux à la cellule de commande 12 du dispositif d'éjection 9.

Le dispositif d'éjection est composé d'au moins une buse 9 alimentée par de l'air comprimé, par exemple à 6Kg/cm² et soufflant l'objet en regard sous la commande d'électrovannes, lesquelles peuvent être les cellules de commande 12. Les électrovannes de commande 12 peuvent être placées sous la double commande de la détection de l'objet avant son arrivée à la buse 9 et de la commande 15, mais quel que soit le mode de réalisation utilisé, les buses d'éjections 9 ne fonctionnent que si la logique 18 permet l'éjection et si l'objet à sélectionner dans le réceptacle 13 se présente de façon convenable devant les buses.

A titre d'exemple, supposons que l'on ne désire pas, en raison de la provenance du lot à trier, récupérer en 13 des plaques métalliques déformées mais que l'on veuille récupérer seulement les bombes aérosols en aluminium. La différence d'information transmise par la cellule optique 7 relative au contour latéral des objets entraîne dans le cas de détection d'une plaque au lieu d'une bombe une commande de la logique 18 interdisant toute transmission 15 - bien que le dispositif de détection 5 indique la présence d'un objet métallique.

Supposons de même qu'en raison de ce lot particulier la forme des plaques soit tellement allongée qu'elle vienne à être recouverte par une bouteille de plastique. Le dispositif de détection 5 associé à la logique 18 indique alors une présence anormalement longue d'un objet métallique et la transmission 15 interdit la commande de l'ouverture de la buse 9, même si une cellule associée à l'électrovanne 12 détectait la présence momentanée de la bouteille de plastique. La plaque restera donc sur l'élément transporteur 11 pour être finalement évacuée en 16 en fin de course du transporteur 11 avec tous les objets hétéroclites.

Par contre, si une bombe aérosol d'aluminium se présente la transmission 15 commande la cellule 12 à un instant précis dépendant de la logique 18 et que l'on choisit pour que l'électrovanne 12 de la buse 9 n'ouvre celle-ci que lorsque la partie centrale de la bombe atteint la hauteur de la buse 9. De cette façon l'évacuation de la bombe dans le réceptacle 13 s'effectue en toute fiabilité. Selon l'un des modes préférés de l'invention, l'instant de la commande est fourni par la logique 18 en fonction des informations de détection de présence métallique, de forme de l'objet fournies par les dispositfs de détection 5 et 7 et de la vitesse de défilement de l'élément transporteur 11.

La détection des parcelles métalliques au poste 6 s'effectue de la même manière qu'au poste 5, le détecteur 6 ayant cette fois un seuil de très grande sensibilité.

La cellule photoélectrique 8 permet de donner une information sur la présence et la forme de l'objet analysé par le détecteur 6. Les informations en résultant sont transmises au module récepteur 17 par la voie 31, la voie 32 transmettant l'information de commande de l'électrovanne 34 de la buse 29.

Comme précédemment, la logique 18 peut aussi permettre la non évacuation d'un objet porteur d'une parcelle métallique. Ainsi, selon les lots à trier on peut avoir intérêt à éjecter dans le réceptacle 36 des bouteilles porteur d'une capsule d'aluminium, ou au contraire, à l'évacuer ultérieurement. Ces modifications de tri peuvent aisément s'accomplir grâce à la logique 18, le détecteur 6 permettant de déceler un seuil correspondant à la seule présence de la capsule d'aluminium et la cellule associée 8 détectant la forme de l'objet. En particulier, dans le cas où l'on désire éjecter un tel objet dans le réceptacle 36, l'information 31 permet de déterminer si l'objet se présente la capsule d'aluminium en avant ou en arrière et la commande, par la voie 32, intervient pour souffler la bouteille en son centre. Inversement, une telle bouteille même équipée de sa capsule, peut, selon la logique adoptée et le module 18 utilisé, laisser passer la bouteille plastique qui est alors analysée par les détecteurs des objets transparents à un rayonnement infra-rouge.

Dans l'exemple représenté, un seul émetteur infra-rouge 40 est utilisé. Ce rayonnement, dirigé vers les orifices 26, 28 et 30 est reçu par une série de récepteurs infra-rouge correspondants schématisés en 41. A cette détection verticale est encore associée une détection optique horizontale de la forme de l'objet sur le transporteur 11 par la cellule optique 42. L'information transmise par la voie 43 au module de réception de la détection 17 est traitée par le module logique 18 pour le déclenchement des circuits du module de commande 19. La voie 44 transmet la commande à l'électrovanne 45 de la buse d'éjection 39. Les produits transparents au rayonnement infra-rouge choisi sont alors éjectés dans le réceptacle 46.

Si l'on désire une simple détection entre objets opaques et objets transparents aux infra-rouge on peut utiliser un détecteur à fenêtre spectrale infra-rouge relativement étendue. Dans ce cas, l'électrovanne 45 est commandée chaque fois que des produits cellulosiques ou en polystyrène, ou en plastiques riches en charges, se présentent devant les ouvertures 26, 28 ou 30. Tous les produits opaques sont par contre acheminés vers la sortie 16 du transporteur 11.

Si l'on désire une meilleure sélectivité afin de séparer par exemple les emballages de polychlorure de vinyle chargé à l'exclusion des emballages en polystyrène et produits cellulosiques, on utilise un détecteur à bande spectrale infra-rouge étroite centrée sur une longueur d'onde de 2,9 microns, le rayonnement transmis par le polychlorure de vinyle étant maximum pour cette longueur d'onde.

De même, si l'on désire séparer les bouteilles en polyester, comme le polyéthylène téréphtalate, des bouteilles de polyéthylène et polychlorure de vinyle, on utilise un détecteur à bande spectrale infra-rouge étroite centrée sur les longueurs d'ondes de 5,8 ou de 7,9 microns permettant une transmission maximum dans le cas d'un polyester.

Ainsi, plusieurs postes successifs permettent d'effectuer des tris de grande sélectivité.

En outre, l'association lecture optique horizontale et lecture verticale infra-rouge permet d'éliminer les informations résultant de la présence accidentelle d'étiquettes opaques aux infra-rouge alors que les parties hors de cette zone particulière sont toutes transparentes à l'infra-rouge.

De même, il devient possible de repérer aisément des endroits transparents à l'infra-rouge mais ne correspondant qu'à des trous aléatoires ou à des effets de formes dans des objets globalement opaques à l'infra-rouge et d'éliminer de ce fait les informations relatives à cette zone défectueuse.

On ne sortirait donc pas du cadre de l'invention en remplaçant les divers organes décrits par des moyens équivalents, en multipliant ou réduisant les postes de détection et en adoptant des voies de transmission d'information de tout type fils électriques, canaux lumineux etc..., les diverses cellules utilisées étant constamment balayées par un flux d'air en vue d'obtenir en permanence des informations précises en dépit des poussières, ou même papiers et similaires, risquant de se plaquer sur les cellules en raison de la variation des produits traités au cours du fonctionnement du dispositif.

REVENDICATIONS

1°) Procédé de tri automatique de mélanges d'emballages et similaires, usagés ou non, ces mélanges répondant déjà à des catégories d'objets données de façon à réduire le nombre d'opérations de tri de natures différentes, la position des objets étant déterminée par rapport au poste d'analyse, caractérisée en ce que la phase d'alimentation comprend un premier tri selon des critères de dimensions favorisant, au cours de la phase suivante l'alignement automatique des objets les uns à la suite des autres et dans un sens favorisant leur stabilité sur un élément transporteur, de telle sorte que chaque objet se présente aux postes de détection de caractéristiques données dans une position stable permettant à la fois l'analyse de l'objet selon le critère de détection retenu et le repérage de la position de la partie de l'objet qui a été détectée au cours de l'analyse par rapport au poste considéré.

2°) Procédé tel que revendiqué en 1 dont une phase comprend un tri par dimensions selon lequel les objets sont animés en rotation au cours d'un déplacement par gravité de telle sorte que leur avancement s'effectue perpendiculairement à leur plus petite dimension caractérisé en ce que lesdits objets sont contraints à s'évacuer les uns à la suite des autres dans un conduit étroit en rotation.

3°) Procédé tel que revendiqué en 2 dont la phase de présentation de l'objet suivant la phase de tri par dimensions s'achève par le centrage de l'objet sur un élément transporteur avec accélération latérale éventuelle de l'objet par rapport à l'élément transporteur.

4°) Procédé tel que revendiqué dans l'une quelconque des revendications 1 à 3 selon lequel chaque objet est analysé devant un poste de détection d'une caractéristique donnée selon une direction perpendiculaire à l'avancement et caractérisé en ce que l'objet est soumis simultanément à un rayonnement optique perpendiculaire à la fois à la direction de l'avancement de l'objet et à la direction dans laquelle s'effectue la détection de la caractéristique considérée.

5°) Procédé tel que revendiqué dans l'une quelconque des revendications 1 à 4 selon lequel l'éjection transversale de l'objet analysé se produit après repérage de la position de l'objet par rapport à un poste de détection au moyen d'un ensemble logique caractérisé en ce que l'information relative à la caractéristique détectée à chaque poste de détection est transmise à un ensemble logique dont le résultat entraîne la commande de l'éjection transversale de l'objet selon les critères choisis.

6°) Procédé tel que revendiqué en 5 selon lequel on détecte au moins la présence d'un corps métallique ainsi que la transparence caractérisé en ce que les détections de la présence d'un corps métallique dans l'objet et celle de la transparence de tout ou partie de l'objet s'effectuent successivement.

7°) Procédé tel que revendiqué en 6 et selon lequel on procède à une double détection de la présence de corps métalliques caractérisé en ce que les postes de détection qui se succèdent utilisent des moyens de détection de plus en plus sensibles.

8°) Procédé tel que revendiqué dans l'une quelconque des revendications 6 et 7 utilisant une détection par rayonnements infrarouge caractérisé en ce que la détection des corps transparents s'effectue au moyen de détecteurs à fenêtres spectrales d'étendues variées et centrées sur des longueurs d'ondes particulières des rayonnements infrarouge ayant traversés les corps transparents.

9°) Procédé tel que revendiqué dans l'une quelconque des revendications 6 à 8 selon lequel une cellule optique analyse l'objet, caractérisé en ce que les résultats, fournis par un poste de détection associé à la cellule optique déterminant simultanément le contour latéral de l'objet, sont analysés en tenant compte des variations accidentelles d'opacité ou de transparence dues à la présence de corps étrangers ou à des perforations.

10°) Appareil de mise en oeuvre du procédé revendiqué dans l'une quelconque des revendications 1 à 9 dont le dispositif de sélection en dimension et de présentation des objets un à un est constitué d'un cylindre de criblage de perforations rectangulaires allongées perpendiculairement aux génératrices, caractérisé en ce que le cylindre de criblage étant raccordé à un cylindre de plus petit diamètre et de même axe au moyen d'un élément tronconique, l'axe commun est incliné de façon que la génératrice inférieure de l'élément tronconique ne présente pas une pente de sens inverse à celle de l'axe commun.

11°) Appareil tel que revendiqué en 10 dont l'espace intérieur du cylindre de petit diamètre est en outre réduit par l'adjonction d'une surface intérieure.

12°) Appareil tel que revendiqué en 11 dont l'orifice du cylindre de plus petit diamètre débouche au-dessus d'un élément transporteur bordé de deux joues latérales constituées de bandes défilant à vitesses différentes toutes deux supérieures à la vitesse de l'élément transporteur.

13°) Appareil tel que revendiqué dans l'une quelconque des revendications 10 à 12 dont l'élément transporteur est formé d'au moins trois bandes, ou courroies trapézoïdales étroites parallèles et jointives, les bandes latérales pouvant être surélevées par rapport aux bandes centrales, ces bandes étant interrompues au moyen de poulies de renvoi en vue de permettre l'analyse des objets entre un poste émetteur de rayonnement traversant l'objet et un détecteur du rayonnement aux endroits d'interruption des bandes ou courroies, les dimensions de l'espace ainsi constitué étant inférieures à celles des plus petits objets traités.

14°) Appareil tel que revendiqué dans l'une quelconque des revendications 10 à 13 comprenant à chaque poste une cellule optique photoélectrique disposée latéralement caractérisé en ce que chaque poste comporte en outre un autre organe de détection en-dessous ou au-dessus de l'élément transporteur, les deux séries d'informations ainsi fournies étant transmises à un module de circuits logiques contrôlant le temps de commande d'un organe de tri associé.

15°) Appareil tel que revendiqué en 14 dont l'organe de tri associé est une buse d'éjection d'air comprimé contrôlée par une électrovanne et se trouvant en regard de réceptacles disposés de l'autre côté du transporteur et à une distance déterminée de l'organe de détection qui lui est associé, caractérisé en ce que l'électrovanne est commandée à un instant fonction des résultats du module des circuits logiques déterminant le contour de l'objet analysé, son sens, son centre et ses caractéristiques.

16°) Appareil tel que revendiqué dans l'une quelconque des revendications 10 à 15 comportant plusieurs postes d'analyse successifs ces postes pouvant détecter la présence de corps métalliques et de rayonnement infrarouges et les produits ne répondant pas aux normes de tri étant évacués à l'amont du transporteur, caractérisé en ce que chaque poste de détection de corps métalliques a une sensibilité fonction de la nature des corps métalliques recherchés inclus ou constitués par l'objet analysé au poste considéré, ces postes étant suivis d'un poste de détection des corps transparents à des rayons infrarouges, les détecteurs répondant à toute fenêtre spectrale infrarouge centrée sur une longueur déterminée en fonction de la sélection désirée.

17°) Appareil tel que revendiqué en 16 dont le poste de sélection des corps métalliques est de faible sensibilité, ce poste étant suivi par des postes similaires de sensibilité croissante et précédant des postes de détection des corps transparents les détecteurs étant soit à bande spectrale infrarouge étendue pour la sélection des matériaux cellulosiques, ou en polystyrène, ou en plastiques riches en charges et à l'exclusion des corps opaques, soit des détecteurs à bande spectrale infrarouge étroite et centrée sur une longueur d'onde de 2,9 microns pour la sélection des emballages de polychlorure de vinyle chargé et à l'exclusion du polystyrène et des produits cellulosiques, soit des détecteurs à bande spectrale infrarouge étroite centrée sur des longueurs d'ondes 5, 8 ou 7,9 microns pour une sélection du polyester à l'exclusion des polyéthylène et polychlorure de vinyle.

Fig.1

Fig.2